Europäisches Patentamt

European Patent Office

Office européen des brevets

(19)

(11) **EP 1 557 791 A1**

(12) **EUROPEAN PATENT APPLICATION**

(43) Date of publication:
**27.07.2005 Bulletin 2005/30**

(51) Int Cl.$^7$: **G06T 5/00**

(21) Application number: **05250228.3**

(22) Date of filing: **18.01.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **22.01.2004 JP 2004014373**

(71) Applicant: **Konica Minolta Medical & Graphic, Inc.
Tokyo 163-0512 (JP)**

(72) Inventor: **Kaji, Daisuke
c/o Konica Minolta Med. & Graph. Inc
Hachioji-shi, Tokyo, 192-8505 (JP)**

(74) Representative: **Nicholls, Michael John
J.A. KEMP & CO.
14, South Square
Gray's Inn
London WC1R 5JJ (GB)**

(54) **Image processing method, and apparatus**

(57)     An image processing method for processing radiation image having signal according to the quantity of radiation passing through an object, comprising the steps of: weighting for giving a preset weight to respective areas of a preset unit in a radiation image; and image processing for processing the radiation image according to weights of the areas given in the weighting step.

## FIG. 1

**Description**

**FIELD OF THE INVENTION**

This invention relates to a method, and apparatus for processing radiation images. More particularly, this invention relates to a method, and apparatus that can obtain radiation images fit for medical diagnosis.

**BACKGROUND OF THE INVENTION**

In recent years, various devices have been developed to take radiation images directly as digital images. A lot of methods and apparatus have been disclosed. For example, Japanese Non-Examined Patent Publications 55-12429 and 63-189853 disclose a method of using a photostimulable-phosphor detector for such an image processing apparatus that detects quantities of radiation given to an object and obtains electric signals of a radiation image from the quantities.

Such an apparatus guides radiant rays through an object to a detector which is made by applying and fixing photostimulable-phosphor to a sheet-like substrate by coating or evaporation and causes the photostimulable-phosphor to absorb radiant rays.

The apparatus then excites the photostimulable-phosphor with light or heat energy to cause the photostimulable-phosphor to emit the absorbed radiation energy as fluorescence, converts this fluorescence into electricity, and finally obtains electric image signals.

Contrarily, another proposed apparatus is a radiation image detecting apparatus that generates electric charges according to the intensities of radiated rays on a photoconductive layer, stores the electric charges in plural capacitors which are disposed two-dimensionally, takes up the charges from the capacitors, and forms an image therewith.

Such a radiation image detecting apparatus uses a so-called flat panel detector (FPD). As disclosed in Japanese Non-Examined Patent Publication H09-90048, a well-known FPD consists of a combination of fluorescent material which generates fluorescence to the intensities of radiated rays and photoelectric converting elements such as photodiode and CCD which receive the florescence directly from the fluorescent material or via a reduced optical system and convert the florescence into electricity.

Further, Japanese Non-Examined Patent Publication H06-342098 discloses an FPD which directly converts the radiated rays into electric charges.

Generally, these radiation image apparatus perform image processing such as gray-level conversion and edge enhancement to make the obtained images fit for medical diagnoses.

Before displaying or outputting radiation images from the obtained image data, the apparatus further processes images to make them clear and legible independently of changes in exposing conditions.

For this purpose, for example, Japanese Non-Examined Patent Publication H06-61325 (FIG. 1, Page 1) discloses a method of generating a cumulative histogram from image data in a selected area of a radiation image, setting a preset data level in the cumulative histogram as a reference signal value and processing images therewith.

Further, for example, Japanese Non-Examined Patent Publication 2000-1575187 (FIG. 4, Page 1 to Page 5) discloses a method of creating a distribution of high signal value areas and low signal value areas, determining an image processing condition from the distribution, and processing images adequately.

By the way, the ratio of high-density areas (through which a lot of radiation passed) and low density areas (through which a small amount of radiation passed) in a radiation image greatly varies depending upon object parts to be shot. For example, the densities of lung images greatly vary according to the object status, specifically according to the breathing status of a patient.

Therefore, as for a method of generating a cumulative histogram from image data in a selected area of a radiation image, setting a preset data level in the cumulative histogram as a reference signal value, and processing images therewith (Japanese Non-Examined Patent Publication H06-61325), the radiation images may not be so legible for medical diagnoses at certain ratios of high and low density areas.

For example, when a gradation processing is made to set a reference signal value at a selected density, the reference signal value becomes smaller and the image wholly becomes high dense if the low-density areas are dominant. Contrarily, if the high-density areas are dominant, the reference signal value becomes greater and the image wholly becomes low dense.

However, when a costal part such as an upper costal part (which contains a lung part where high-density areas are dominant) and a lower costal part (which contains an abdominal part where low-density areas are dominant) is shot for diagnosis, the image to be diagnosed contains both high-and low-density areas. In terms of medical diagnosis, it is not preferable that the image predominantly has either low-or high-density areas.

There have been proposed various techniques to determine image-processing parameters. However, the techniques determine reference signal values by analyzing signal values obtained from a selected area [or region of interest] in each image. Therefore, if the setting of a region of interest or the result of signal analysis is improper, the obtained images may not be fit for medical diagnoses. Further, as these techniques determine the content of image processing assuming anatomies of human bodies, image processing may not be stabilized if exposings are made under unexpected conditions.

This invention has been made to solve the above problems. Specifically, one object of this invention is to provide an image processing method, apparatus, and program that can prevent generation of a exposing condition that may disable medical diagnosis of images due to a failure in determination of an image processing condition and always process images under an adequate or almost adequate condition.

## SUMMARY OF THE INVENTION

To solve the above problems, this invention is characterized by the following:

An image processing method for processing radiation images having signals proportional to the quantities of radiant rays passing through an object to make them fit for medical diagnoses, wherein the method consists of a weighting step for giving a preset weight to respective areas of a preset unit in a radiation image and an image processing step for executing image processing according to weights of the areas given in the weighting step.

An image processing apparatus for processing radiation images which have signals proportional to quantities of radiant rays passing through an object to make them fit for medical diagnoses, wherein the image processing apparatus consists of a weighting means for giving a preset weight to respective areas of a preset unit in a radiation image and an image processing means for executing image processing according to weights of the areas given by the weighting means.

In the image processing apparatus the image processing means performs frequency processing or equalization processing according to weights due to degrees of significance of selected areas or pixels of an image that are obtained as the result of image analysis, wherein the image processing means has a function to automatically control the intensity of the frequency processing or equalization processing.

In the image processing apparatus the image processing means performs frequency processing or equalization processing according to weights due to degrees of significance of selected areas or pixels of an image that are obtained as the result of image analysis, wherein the image processing means has a function to control the intensity of the frequency processing or equalization processing according to values entered from the operation means.

An image processing program for processing radiation images which have signals proportional to quantities of radiant rays passing through an object to make them fit for medical diagnoses, wherein the program contains a weighting routine for giving a preset weight to respective areas of a preset unit in a radiation image and an image processing routine for executing image processing according to weights of the areas given by the weighting routine.

## BRIEF DESCRIPTION OF THE DRAWINGS

FIG. 1 is a functional block diagram showing the whole configuration in accordance with this invention.

FIG. 2 is a flow chart of the whole processing in accordance with this invention.

FIG. 3 is an explanatory drawing of the processing to recognize the irradiation field in accordance with this invention.

FIG. 4(a) and (b) are explanatory drawings of an original image of a cervical vertebra in accordance with this invention and edges detected in the cervical vertebra image.

FIG. 5 is an explanatory drawing of one example of setting of weighting in accordance with this invention.

FIG. 6 is an explanatory drawing of one example of setting of weighting in accordance with this invention.

FIG. 7 is a graph to calculate a coefficient to weight the whole image in accordance with this invention.

FIG. 8 is an explanatory drawing of digitization in accordance with this invention.

FIG. 9 is an explanatory drawing of partitioning a front chest image into areas in accordance with this invention.

FIG. 10 is an explanatory drawing of a function to reduce the degree of edge significance in accordance with this invention.

FIG. 11 is a graph to calculate an enhancement correction coefficient in accordance with this invention.

FIG. 12 is an explanatory drawing of a medical image recording system installed in a medical facility.

## DETAILED DESCRIPTION OF THE INVENTION

When processing a radiation image which has signals proportional to quantities of radiant rays passing through an object to make them fit for medical diagnoses, this invention partitions the radiation image into areas of a preset area unit, gives a preset weight to each of the areas and performs an image processing according to the weights of the areas.

Weighting can be done in terms of the following:

- Degree of significance of respective selected pixels
- Statistic quantities of image (dispersion value, average value, maximum value, minimum value, etc. of a target pixel and its vicinity)
- Values detected by an image-edge detecting filter (Wavelet filter, Sobel filter, Laplacian filter, etc.)
- Position of each pixel in an image (degree of center, degree of end, etc.)
- Image density

Further, this invention can perform plural weightings in parallel, determine weights according to a decision making, fuzzy integral, minimum or maximum weight, and average weight value, and integrate weights.

The image processing here means a frequency enhancement processing which suppresses signal enhancement or reduces pixel values of pixels having small weights or a equalization processing which corrects signals to give a fully-high contrast to areas having high weights when a gradation processing is made on the compressed image.

When displaying a radiation image, this invention can superimpose the given weights on the image.

Further, this invention can execute plural weightings and select one of the obtained weights.

Further, this invention can execute plural weightings, process images with the given weights, and display the radiation images in sequence after image processing with the weights.

Therefore, as this invention processes images according to weights corresponding to pixels of each radiation image, for example, with weights corresponding to the degree of significance of each area or pixel, this invention can obtain images fit for medical diagnoses.

Consequently, this invention can prevent generation of a exposing condition that may disable medical diagnosis of images due to failure in determination of an image processing condition and always process images under an adequate or almost adequate condition.

The best modes of this invention will be described in detail with reference to the accompanying drawings.

Below will be described an image processing method, an image processing apparatus, and an image processing program which are the preferred embodiments of this invention. However, it is to be understood that the invention is not intended to be limited to the specific embodiments.

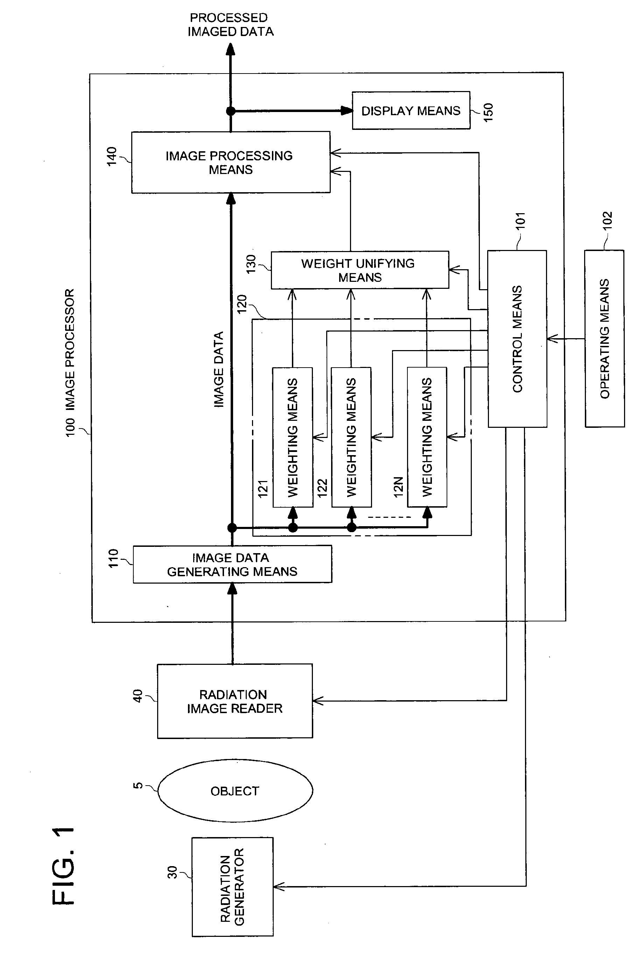

The respective means of the preferred embodiments can be built up with hardware, firmware, or software. FIG. 1 is a functional block diagram of the embodiment, showing image processing steps, image processing means, and image processing program routines.

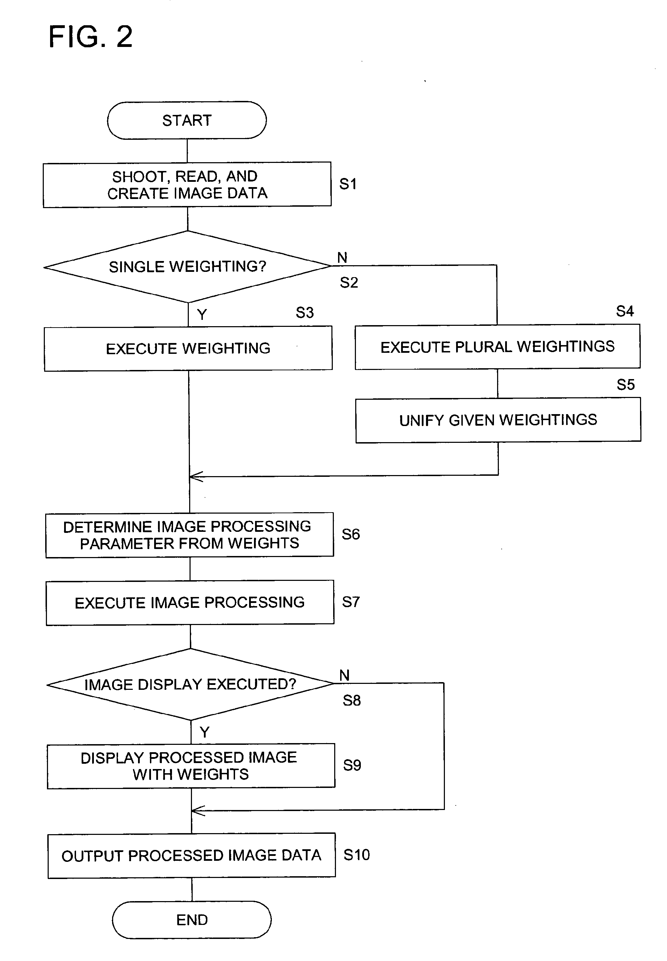

Below will be explained the configuration and operation of the best mode of this invention in detail referring to a block diagram of FIG. 1, a flow chart of FIG. 2 and other explanatory drawings. Means of FIG. 1 indicate not only the means in an image processing apparatus, but also image processing steps and program routines.

(Whole configuration and process flow)

(a) Whole configuration

The image processing system of this invention consists of a radiation generator 30, a radiation image reader 40, and an image processor 100 as shown in FIG. 1.

As shown in FIG. 1, the image processor 100 consists of a control means 101, an operating means 102, an image data generating means 110, a weighting means 120, a weight integrating means 130, an image processing means 140, a display means 150, and a parameter determining means 150. As shown in FIG. 1, the weighting means 120 consists of N pieces of weighting means (121 to 12N).

(b) Process flow

- The control means 101 controls various kinds of processing such as image exposing, image reading, weight integrating, and determination of image processing parameters.
- The control means receives operations and setting made on the operating means 102 by the operator.
- Radiant rays emitted from the radiation generator 30 passes through an object 5 and enters the radiation image reader 40. In this case, the control means 101 controls generation of radiant rays in the radiation generator 30 and reading by the radiation image reader 40.
- The image data generating means 110 receives signals from the radiation image reader 40 and converts them into image data. (See S1 in FIG. 2.)

- The weighting means 120 gives a weight to each pixel according to the preset rule of the radiation image data. (See S2 in FIG. 2.) If only one weight is given (Y at S2 in FIG. 2), the weighting means 120 generates one kind of weight and gives it to the image. (See S3 in FIG. 2.)
- When two or more kinds of weights are to be given (N at S2 in FIG. 2), the weight integrating means 130 integrates weights according to a preset rule. (See S5 in FIG. 2.)
- The image processing means 140 determines image processing parameters (or image processing conditions) for image data sent from the image data generating means 110 according to weights and processes images by the parameters. (See S7 in FIG. 2)
- When the image is to be displayed (Y at S28 in FIG. 2), the display means 150 displays the processed image together with the given weights. (S9 in FIG. 2)
- When the above processes are complete, the control means 101 controls to output the processed image data to the outside. (See S10 in FIG. 2.)

(Details of respective means and processing steps)

(1) Operations and control

The control means 101 gets exposure condition such as information about a exposing part or direction through user interface. This kind of information is entered when the user specifies the exposing part, for example, by selecting and pressing a button which indicates the part on the user interface (not shown in the figure) of the image processing apparatus which is equipped with both a display unit and a touch-sensitive panel. This kind of information can be entered also by means of magnetic cards, bar codes, HIS (hospital information system for information management by a network), etc.

(2) Entering a radiation image

The radiation generator 30 is controlled by the control means 101 to emit radiant rays towards the image pickup panel on the front of the radiation image reader 40 through an object 5. The radiation image reader 40 detects rays through the object 5 and gets them as an image signal.

Japanese Non-Examined Patent Publications 11-142998 and 2002-156716 disclose an input device using a photostimulable-phosphor plate as a specific configuration example. As an input device using a flat panel detector (FPD), Japanese Non-Examined Patent Publications H06-342098 discloses an input device of a direct FPD type which converts the detected X-rays directly into electric charges and uses the electric charges as image signals. Japanese Non-Examined Patent Publications H09-90048 discloses an input device of an indirect FPD type which temporarily converts the detected X-rays into light, receives and converts the light into electric charges.

In this case, the radiation image reader 40 can emit light rays from a light source such as laser and a fluorescent lamp to a silver film having a radiation image, receive light rays passing through the silver film, convert the light into electric signals, and generate image data. Further, the radiation image reader 40 can use a detector of the radiation quantum counter type to convert radiation energy directly into electric signals and generate image data therewith.

To obtain a radiation image of the object 5, the object 5 is placed between the radiation generator 30 and the image pickup panel of the radiation image reader 40 so that radiant rays passing through the object 5 from the radiation generator 30 may be received by the image pickup panel.

(3) Setting a region of interest

By the way, when taking a radiation image, a radiation shielding material such as a lead plate is placed on part of the object 5 or on the radiation generator 30 to limit the irradiation field (narrowing the irradiation field), that is, in order not to irradiate part of the object which need not be diagnosed or to prevent the region of interest from being disturbed by rays scattered on the other unwanted areas (which may reduce the resolution).

If level conversion and succeeding gradation processing are performed using image data of areas inside and outside the irradiation field while the irradiation field is narrowed, the image data of areas outside the irradiation field may disturb the image processing of the image data of areas inside the irradiation field which is required for medical diagnosis.

To prevent this, the image data generating means 110 has a function to distinguish areas inside the irradiation field from areas outside the irradiation field (for recognition of the irradiation field).

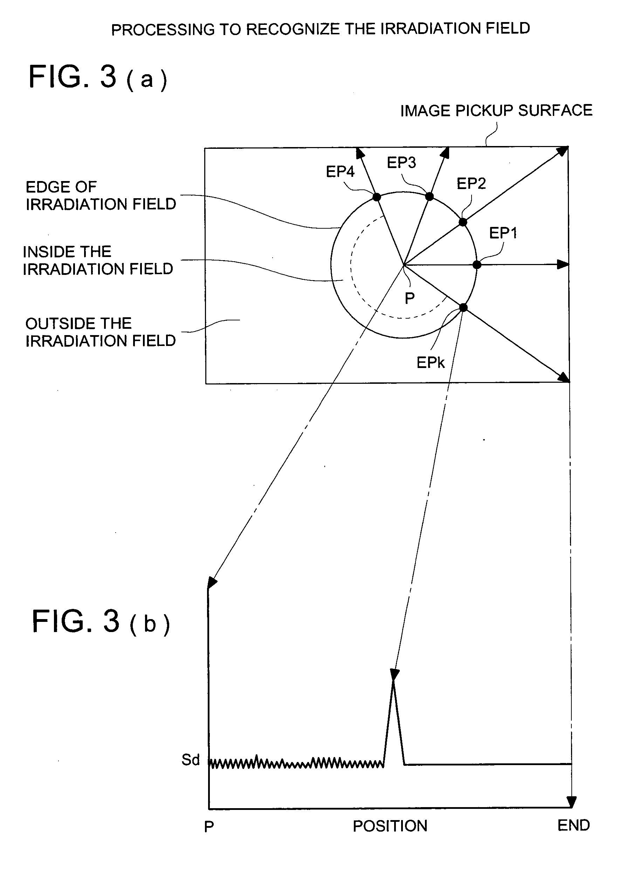

As an irradiation field recognition, for example, Japanese Non-Examined Patent Publications 63-259538 discloses a method of obtaining the edge of an irradiation field. This method consists of, for example, differentiating image data of a line segment which runs from a preset point P on the image-pickup surface to one end of the image-pickup surface as shown in FIG. 3A, determining a candidate edge point EP1 judging from the signal levels of the differentiated signal as the differentiated signal has the greatest signal level on the edge of the irradiation field as shown in FIG. 3B, repeating this operation in every direction from the preset point P on the image-pickup surface to get candidate edge points (EP1 to EPk), and connecting the adjoining candidate edge points EP1 - EPk in sequence with line segments or curved line segments.

Japanese Non-Examined Patent Publications H05-7579 discloses another method for irradiation field recognition. This method consists of partitioning the image pickup surface into small areas and using dispersion values of these small areas. In this case, small areas outside an irradiation field have almost evenly small quantities of radiation and the dispersion values of their image data are small. Contrarily, small areas inside the irradiation field have greater dispersion values (than the small areas outside the irradiation field) as the radiation quantities are modulated by the object. Further, small areas containing part of the irradiation field edge have the greatest dispersion values because the areas contain a part having the minimum radiation quantity and a part whose radiation quantity is modulated by the object. Accordingly, small areas containing the irradiation field edge can be discriminated by these dispersion values.

Japanese Non-Examined Patent Publications H07-181409 discloses still another method for irradiation field recognition. This method rotates image data around a preset axis as the center until a parallelism detecting means detects that the boundary of the irradiation field is parallel with a coordinate axis of the Cartesian coordinate system formed on the image. When this parallel status is detected, the linear equation calculating means calculates a linear equation of the boundary (before rotation) from the angle of rotation and the distance between the center of rotation and the boundary. Then, an area enclosed by plural boundaries are determined by linear equations and the irradiation field is discriminated. When the irradiation field edge is curved, the boundary point extracting means extracts for example one point according to the image data, extracts a next boundary point from a set of candidate boundary points around this boundary point, and repeats these steps to extract boundary points in sequence from the set of candidate boundary points. With this, a curved irradiation field edge can be discriminated.

After the irradiation field recognition, this method seta an area (called a "region of interest") to determine a distribution of levels of the image data DT sent from the radiation image reader when converting the distribution of levels of the image data DT into a distribution of desired levels.

For example, when exposing a front chest image, the region of interest is set on the whole lung so that it may contain all important areas required for medical diagnosis.

However, this embodiment does not always require the irradiation field recognition and the setting of a region of interest. In addition to calculation of weight candidates to be explained below, it is possible to use a method of employing weight candidates which are low for blank areas and areas outside the irradiation area and high for the human body areas by giving low weights to areas having low image dispersion values in a selected area. In this case, the selected area for calculation of dispersion values should preferably be 1/40 to 1/20 of the whole image area.

(4) Weighting

The weighting means 130 is assigned to each pixel or a partitioned area of a preset size to give a weight according to a preset rule of the radiation image.

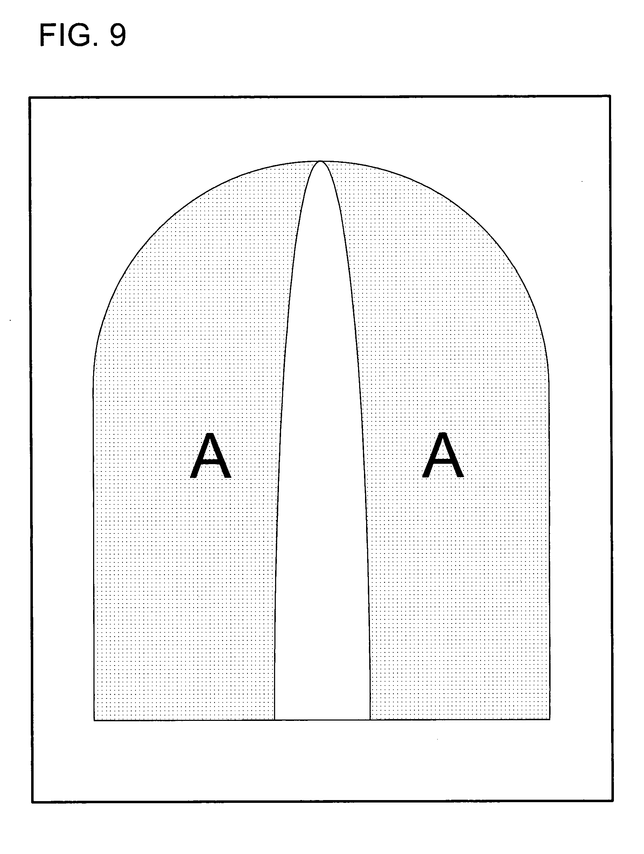

One of weighting methods is, for example, a method of giving weights to preset positions of an image in advance. Specifically, this method gives preset weights to preset positions in the image according to the degree of diagnosis using a template or the like for each exposing object. For example, when exposing a front chest image, this method gives a weight of significance level 1 to area A in FIG. 9 and weights of lower significance levels to the other areas.

It is also possible to give a high weight to an image edge having an object structure which is very important in diagnoses by extracting the edge by a Laplacian filter or a differential filter and making the edge contrast higher. In addition to these filters, a wavelet filter and a Gauss-Laplacian filter of a multiple resolution type can be used for detection of the edges. (Reference: "Foundamentals of Wavelet Analysis" written by Kouhei ARAI, Morikita Shuppan Co., Ltd., 2000, Page 80)

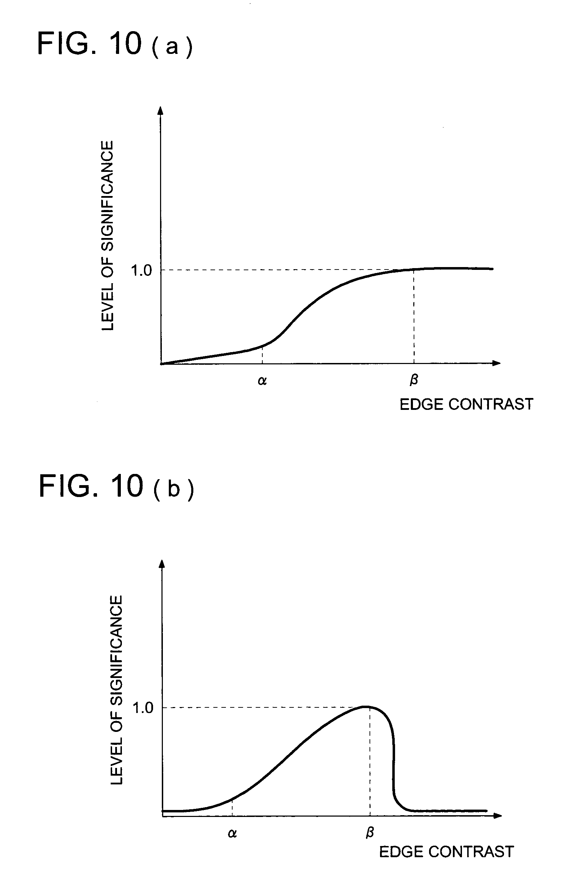

In this case, the weight can be an absolute value of a filtered edge component. Further, by using functions of FIG. 10(a) and FIG. 10(b) or the like, it is possible to reduce the degree of significance of a small area such as a noise and a large artificial edge such as the end of the irradiation field.

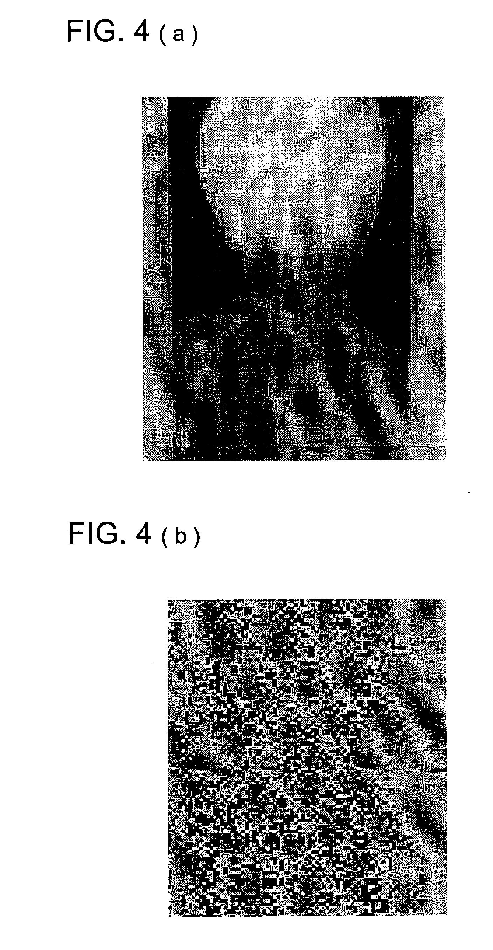

In this case, alpha and beta values of FIG. 10 should preferably be about 10% and 90% of the maximum edge signal value in this order. FIG. 4(a) shows an original cervical vertebra image and FIG. 4(b) shows an edge detected in the original cervical vertebra image of FIG. 4(a).

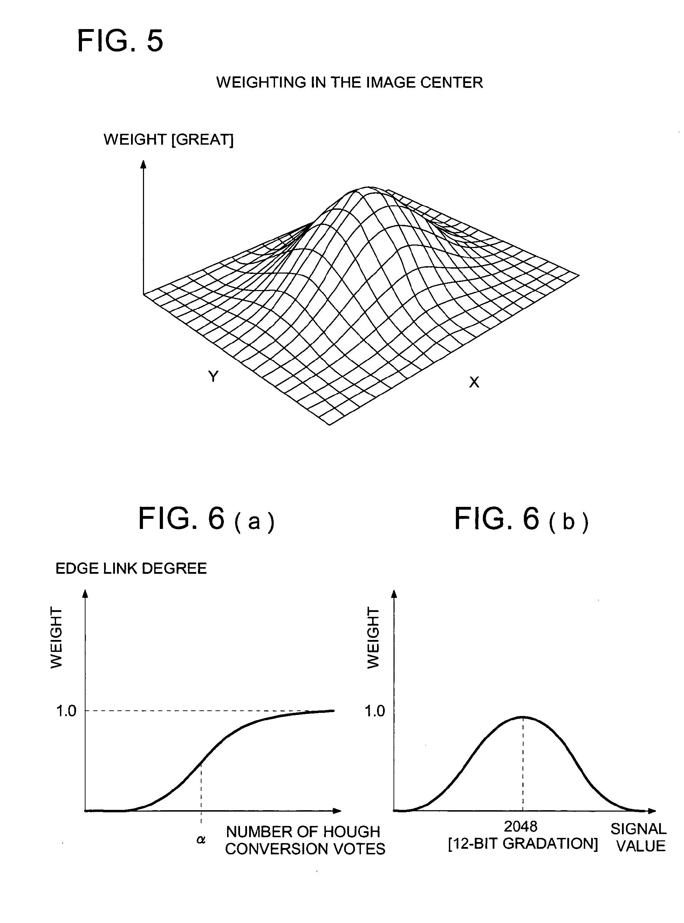

Further, as a portion which is significant in diagnoses is usually placed in the center of an image, a method is also effective that gives higher weights towards the center of the image as shown in FIG. 5 or contrarily gives higher weights towards the end of the image. This can give proper weights in images having objects on the end areas. For example, mammography and pantomography can be used to shoot such portions.

Another available method is to check image densities and give low weights if the densities are extremely high or low or to check the degree of linkage with an adjoining edge and give weights according to the degree of linkage. In detail, this method consists of transforming an edge detection image having, as edges, values greater than threshold values filtered by a Laplacian filter and the like into a parameter space by the Hough transformation technique, obtaining a straight line or circle whose number of votes is 1 or more in this parameter space by the inverse Hough transformation technique, writing a weight-vote graph of pixels on the line or circle as shown in FIG. 6(a) and determining weights from this graph. This can reduce weights for unwanted points such as irradiation field edges and increase weights for the other areas. The alpha value of FIG. 6(a) is dependent upon lengths of edges to be detected and should preferably be changed according to a exposing object. Experimentally, the alpha value should preferably be about 1/3 of the length or width of the image. (Reference of Hough transformation technique: "Foundations of Image recognition II - Characteristic extraction, edge detection, and texture analysis" written by Shunji MORI and Umeko ITAKURA, Ohmsha Ltd, 1990)

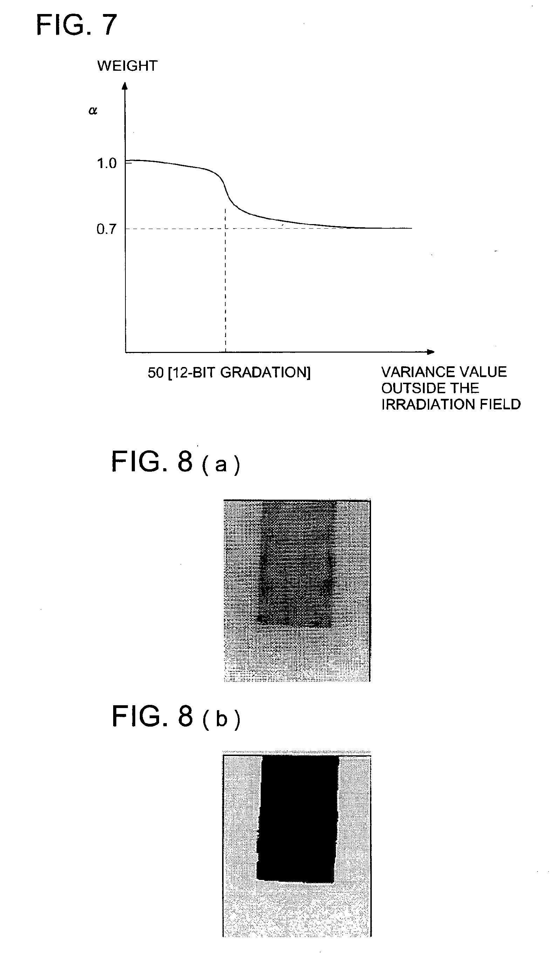

Further, it is possible to digitize the original image (FIG. 8(a)) by a discrimination analysis, recognize the blank areas and non-irradiation areas in the image (FIG. 8(b)), calculate the mean dispersion values of these areas, and give weights according to the mean dispersion values. In this case, it is possible to give higher weights to the whole image which has a better granularity by applying a coefficient calculated from the graph of FIG. 7 to the weights of the whole image. Although this method uses dispersion values, but it is possible to use other statistic values. In this case, there is a method of, for example, creating a histogram related to pixel values and giving weights according to the frequency distribution. This method can give high weights to pixel values which appear frequently.

Further, it is possible to execute plural weightings in combination assuming that weights obtained by the above methods are used as candidate weights and unified by a weight integrating method below.

Although the above methods respectively determine weights for each pixel, it is possible to determine weights for partitioned areas of a preset unit area. This can be accomplished by a method of skipping pixels of the image at a preset thinning ratio, giving weights to the thinned image as explained above, and reflecting the weights of the skipped pixels upon the corresponding pixels of the original image or a method of executing above weighting assuming that a mean pixel value of a selected area as a representative pixel value of the area.

(5) Integrating weights

The weight integrating means 130 integrates plural weights calculated by the weighting means 120 so that a combination required for diagnoses may be weighted. This integrates so that areas required for diagnoses may be weighted. This enables processing that weights areas required for diagnoses.

In other words, the weight integrating means 130 determines a final weighting using plural candidate weights. By normalizing the obtained weights for example to a maximum value of 1 and using a maximum or minimum weight value in respective methods, it is possible to select the most effective weight to each pixel when using a maximum weight value or to give the most deliberate weight to select an assured degree of significance when using a minimum weight value.

Additionally, a fuzzy integral used for a decision making can give a weight considering the combinations of the above methods.

This fuzzy integral can be for example a Choquet integral. This integral method requires a fuzzy measure. The fuzzy measure is a measure space $(X, F, \mu)$ under a measure condition required by the Lebesgue integral from which the completely additivity is loosened. Specifically, the conditions below are usually required.

When X is a set and $F = 2^X$, "$\mu$" values are given as shown below.

1. $\mu = (\phi) = 0$
2. $\mu = (X) = 1$
3. When $A \in 2^X$, $0 \leq \mu (A) < \infty$
4. If $A \in B \in X$ when $A, B \in 2^X$, $\mu (A) \leq \mu (B)$.

For example, when the weight candidates are "Edge strength," "Image center degree," and "Image density" and a set of these is expressed by X = [Edge strength, Image center degree, Image density], the measures for the power set $2^X$ are given as follows considering the subjective measures.

$\phi$ = 0.0
[Edge strength] = 0.6
[Image center degree] = 0.3

[Edge strength, Image center degree] = 0.8
[Image density] = 0.3
[Image density, Edge strength] = 0.7
[Image density, Image center degree] = 0.9
[Image density, Image center degree, Edge strength] = 1.0

The Choquet integral is defined as shown below for these measures.

[Equation 1]

$$(C)\int hd\mu \equiv \int_0^{+\infty} \mu(\{x; h(x) \geq \alpha\})d\alpha + \int_{-\infty}^0 [\mu(\{x; h(x) \geq \alpha\}) - \mu(X)]d\alpha$$

This indicates that the result of a fuzzy integral is as follows when the weight candidates of the target pixel are respectively Edge enhancement = 0.6, Image center degree = 0.5, and Image density = 0.7:

1.0 * 0.5 + 0.8 * (0.6 - 0.5) + 0.5 * (0.7 - 0.6) = 0.63

This enables integration of weights on which a subjective measure is reflected. (Reference: "Foundation of Fuzzy Logic" by Hiroshi INOUE and Michio AMAGASA, Asakura Shoten Co., Ltd., P.89-P.104, 1997)
It is also possible to execute plural kinds of weightings and select any of the obtained weight candidates by the operating means 102. Additionally, the other fuzzy integral such as Sugano integral can be used.

(6) Weighting-based image processing

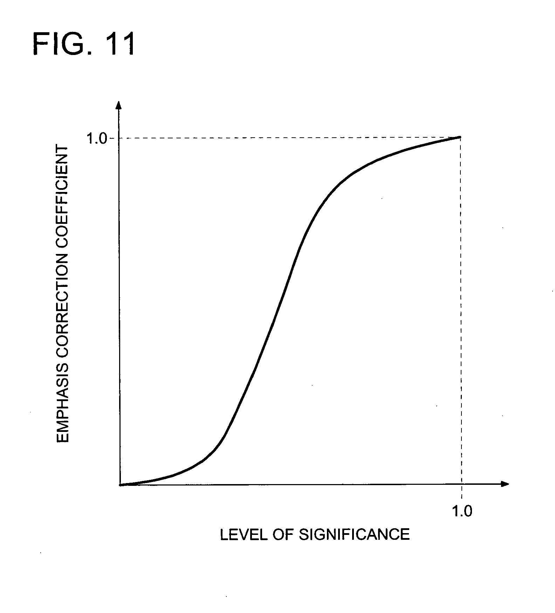

The image processing means 140 processes radiation images by frequency enhancement processing, equalization processing, gradation processing using LUT, and equalization processing processing before the gradation processing.
Below will be explained an example of using the equalization processing. The equalization processing compresses a dynamic range of an image to all areas in the image in a visible area. However, when the equalization processing is made too much, the contrast of the whole image may be deteriorated. Therefore, the compression should be adequate.
For adequate compression, the weight of each pixel value must be checked. The weight can be obtained by adding all weights of pixels of the image. Specifically, when each pixel (C,L) has a weight W(C,L), a weight V(X) to be assigned to a pixel value X is expressed by
$V(X) = \Sigma W(C,L) * H(X)$
where
$\Sigma$ indicates to scan the whole image and total weights only when pixel values are X.
H(X) is a function to correct a weight and enables evaluation of both weights and the number of pixels having the weights. When the V(X) value exceeds a certain threshold value, the contrast of the pixel value is checked after gradation processing. The contrast can be checked by a gain Z(X) below.
$Z(X) = L(X-A) - L(X+A)/2A$
where
X: pixel value
A: constant
L(X-A): Pixel value after gradation processing
L(X+A): Pixel value after gradation processing
If the gain Z(X) is smaller than a preset value, the equalization processing is made greater until the Z(X) value reaches the preset value.
This kind of equalization processing depending upon the signal gain of significant pixels can make it minimum required processing.
Additionally, weak enhancement can be selectively applied to unwanted areas (such as areas containing noises and areas outside the irradiation field) by multiplying the enhancement correction coefficient calculated from the graph of FIG. 11 by a coefficient representing a degree of enhancement of the frequency processing to reduce the degree of enhancement of frequency processing on each pixel having a small weight. It is possible to reduce the pixel value by giving a negative enhancement correction coefficient to each pixel having a small weight.

(7) Displaying and outputting processed image data When the processed image data must be displayed on the image display means 140 (Y at S8 in FIG. 2), the processed radiation image is displayed together with the given weights on the display means (S9 in FIG. 2). The operator can clearly know how and with what weights the image was processed. In this case, the image display means 140 can display the processed mage without the weights.

Further, this invention can run plural weighting means in parallel, process images with plural weights obtained by the weighting means, and display the processed images in sequence. This enables selection of desired weights for image processing from the operating means 102.

After the above processing is all complete, the control means 101 controls to output processed mage data to the outside of the apparatus (S10 in FIG. 2).

As the result of the above processing, this invention can prevent generation of a exposing condition that may disable medical diagnosis of images due to failure in determination of an image processing condition and always process images under an adequate or almost adequate condition.

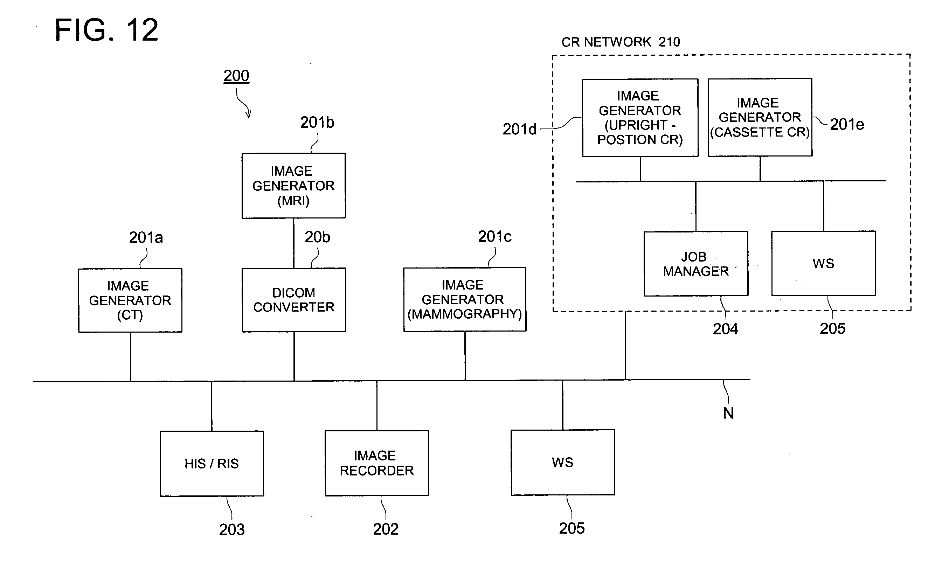

Next will be explained an example of determining an image processing condition by varying the weighting coefficient of each parts of the object radiographed on the image processing apparatus 100 with reference to FIG. 12. FIG. 12 is an explanatory drawing of a medical image recording system installed in a medical facility or the like. This system shoots affected parts of a patient, processes the image data, and records it on a recording medium.

As shown in FIG. 12, the medical image recording system 200 of this preferred embodiment is equipped with an image recorder 202, image generators 201a to 201e, a DICOM converter 206, a CR-related network 210, and an RIS (radiography information system) or HIS (Hospital information system) 203. The image recorder 202, image generators 201a to 201e, the DICOM converter 206, the CR-related network 210 and the RIS or HIS 203 are respectively connected to a network bus N for transmission. Further, in the medical image recording system 200, the functions of the image processing apparatus 100 (not shown in the drawing) are available anywhere in this system. The functions of the image processing apparatus 100 can be contained in a body, for example, in the image generator. Further, they can be functions of the WS205 and WS206 and functions of the image recorder 202.

The image generator 201a performs computerized tomography (CT) conforming to DICOM (Digital Imaging and Communication in Medicine) which is a standard pertaining to medical images and transmissions. The image generator 201a reads image data of affected regions of a patient, attaches additional information (e.g. patient ID information, information on exposing conditions, and information to indicate that the image was taken by the image generator 201a) to the image data, and sends the image data in a DICOM-conforming data format to the other devices (e.g. image recorders 202 and WS206) which are connected to the transmission network.

The image generator 201b is an image generator for MRI (Magnetic Resonance Imaging) which does not conform to DICOM. The image generator 201b reads image data of affected regions of a patient and sends it to the DICOM converter 206. The DICOM converter 206 attaches additional information (e.g. patient ID information, information on exposing conditions, and information to indicate that the image was taken by the image generator 201b) to the image data, converts it into a DICOM-conforming data format, and sends the resulting data to the other devices (e.g. image recorders 202 and WS206) which are connected to the transmission network.

The image generator 201c is a DICOM conforming image generator for breast photography only. The image generator 201 reads image data of patient breasts attaches additional information (e.g. patient ID information, information on exposing conditions, and information to indicate that the image was taken by the image generator 201c) to the image data, and sends the image data in a DICOM-conforming data format to the other devices (e.g. image recorders 202 and WS206) which are connected to the transmission network.

The image generators 201a, 201b and 201c themselves are specific to exposing regions. Therefore, when varying the weighting coefficient for each exposing region, it is possible to identify a exposing region by identifying the image generator.

The CR-related network 210 consists of image generators 201d and 201e, work station WS205, and a job manager 204.

WS205 obtains photography/examination order information from RIS or HIS 203, and relates the examination order information to ID of a cassette to be used, exposing condition, image processing condition, etc. to identify patient images.

The job manager 204 determines a workstation WS205 to which images (read by the image generators 201d and 201e) are distributed and sends control conditions of the image generators 201d and 201e.

The image generator 201d is an upright-position CR-related image generator. The image generator 201d reads image data of a patient in the upright-position, and sends the image data to WS205. The WS205 attaches additional information to the image data, and sends the image data in a DICOM-conforming data format to the image recorder 202 and or workstation WS206.

The image generator 201e is an image generator which used a cassette for CR photography.

The image generator 201e CR-photographs affected regions of a patient by RIS or HIS 203, sets the exposed cassette in an image reader (not shown in the drawing), reads image data from mages in the cassette, and sends it to WS205. The WS205 attaches additional information to the image data, and sends the image data in a DICOM-conforming data format to the image recorder 202 and/or workstation WS206.

In this way, a combination of the image generator 201d or 201e and WS205 actualizes an image generator function to generate image data containing additional information.

In the CR-related network 210, the image generator 201d itself is specific to a exposing region. Therefore, when varying the weighting coefficient for each exposing region, it is possible to identify a exposing region by identifying the image generator. Contrarily, the image generator 201e which uses a cassette for CR photography is not specific to exposing regions.

The cassette-type image generator handles both a cassette for general photography and a cassette for photography of a specific region (e.g. for breast photography). Therefore, to vary a weighting coefficient for each exposing region in a medical image recording system containing an image generator, it is necessary to identify not only an image generator but also information of shot regions and others (e.g. image data reading pitch).

To identify information specific to a exposing region and others, it is possible to register each exposing region as additional information given to created image data according to various kinds of information sent from RIS or HIS 203 when registering a cassette for WS205.

Further, for example, if breast photography is identified when a cassette is registered for WS205, the image generator reads image data at a reading pitch fit for breast radiography. This image data reading pitch is registered as additional information for WS205.

Therefore, when determining a condition of processing the read image data, WS205 or WS206 discriminates the exposing region from the additional information attached to the image data, and gets a weighting coefficient for the exposing region from the weighting coefficient table (which has been stored in advance).

The image processing apparatus 100 (not shown in the drawing) processes the read image data using this selected weighting coefficient, and determines an image processing condition (dynamic range, frequency enhancement range, etc) from the result of processing. The processed image data can be displayed by the display means 150. The result of display (the processed data) and the weighting coefficient can be stored in a DB (not shown in the drawing).

It becomes a possibility to perform weighting which is further suitable for the diagnosis using the information on the part obtained by distinguishing a part.

For example, in processing the image of the part as a mammogram, by acquiring the information on a part, it becomes possible to deduce an part of the object by binarization processing etc., and proper weighting can be performed. In the case of an image of chest PA, the shape of an image histogram becomes as the two peaks.

A lung part that is important when diagnosing corresponds to the peak which has a high signal value of the two peaks in the above-mentioned image histogram.

Here, it becomes a possibility to perform the image processing for which it was further suitable, when diagnosing by performing weighting to the part of the peak which has a high signal value.

In using ROI recognition processing etc., the information of a part of the object is important.

When setting up ROI particularly using anatomical positional information, in order to acquire information, such as positioning of photographing, the information of the part is extremely important.

**Claims**

1. An image processing method for processing radiation image having signal according to the quantity of radiation passing through an object, comprising the steps of:

   weighting for giving a preset weight to respective areas of a preset unit in a radiation image; and
   image processing for processing the radiation image according to weights of the areas given in the weighting step.

2. The image processing method of claim 1, wherein the weights in the weighting steps are determined according to the preset degree of significance of respective pixels.

3. The image processing method of claim 1, wherein the image processing step is a frequency emphasizing processing to suppress signal enhancement or reduce pixel values of pixels having small weights.

4. The image processing method of claim 1, wherein the image processing step is a equalization processing that corrects signals so as to give full contrasts to high weighted areas when gradation processing is applied to the dynamic range processed images.

5. The image processing method of claim 1, wherein the weights are determined according to the statistic of an image in the weighting step.

6. The image processing method of claim 1, wherein the statistic quantities used in image weighting are variance values near the target pixels.

7. The image processing method of claim 1, wherein the weights are determined according to edge detection values detected by an image-edge detection filter.

8. The image processing method of claim 7, wherein the weighting step uses a wavelet filter to detect image edges.

9. The image processing method of claim 1, wherein the weighting step determines weights according to locations of pixels in each image.

10. The image processing method of claim 9, wherein the weighting step gives greater weights towards the center of the image when determining weights according to locations of pixels in each image.

11. The image processing method of claim 9, wherein the weighting step gives greater weights towards a selected end of the image when determining weights according to locations of pixels in each image.

12. The image processing method of claim 1, wherein the weighting step determines weights depending upon image densities.

13. The image processing method of claim 1, wherein the weighting step further containing the steps of:

weighting candidate calculating for calculating a plurality of weighting candidates; and
weighting candidate integrating for integrating the weighting candidates,

wherein the image processing step processes images according to the area weights obtained by integrating the weighting candidates.

14. The image processing method of claim 13, wherein the weighting candidate calculating step calculates from statistic quantities in each image.

15. The image processing method of claim 14, wherein the statistic quantities used in the weighting candidate calculating step are dispersion values near the target pixels.

16. The image processing method of claim 13, wherein the weighting candidate calculating step calculates from edge detection values detected by the filter that detects image edges.

17. The image processing method of claim 16, wherein the weighting candidate calculating step uses a wavelet filter.

18. The image processing method of claim 13, wherein the weighting candidate calculating step calculates depending upon locations of pixels in the image.

19. The image processing method of claim 18, wherein the weighting candidate calculating step gives greater weights towards the center of the image when determining weights according to locations of pixels in each image.

20. The image processing method of claim 18, wherein the weighting candidate calculating step gives greater weights towards a selected end of the image when determining weights according to locations of pixels in each image.

21. The image processing method of claim 13, wherein the weighting candidate calculating step determines according to densities of the image.

**22.** The image processing method of claim 13, wherein the weighting candidate integrating step integrates weights according to a decision making.

**23.** The image processing method of claim 13, wherein the weighting candidate integrating step integrates weights according to a fuzzy integral.

**24.** The image processing method of claim 13, wherein the weighting candidate integrating step determines weights according to the maximum or minimum weight values given by the weighting steps.

**25.** The image processing method of claim 13, wherein the weighting candidate integrating step determines weights according to the average of the weights given by the weighting steps.

**26.** The image processing method of claim 1, further comprising the step of:

displaying for displaying processed radiation image,

wherein the image displaying step superimposes weights given by the weighting steps on the radiation image.

**27.** The image processing method of claim 13, wherein the weighting candidate calculating step comprises a step of:

selecting for selecting at least one of weighting candidates which are given by the weighting candidate calculating step and the image processing step processes images according to the weighting candidates selected by the weighting candidate selecting step.

**28.** The image processing method of claim 1, further comprising a step of:

displaying for displaying a processed radiation image,

wherein the weighting step executes plural weighting steps, the image processing step processes images according to the weights given by the weighting step, and the image displaying step sequentially displays the radiation images which are processed with weights in the image processing step.

**29.** The image processing method of claim 1, further comprising the steps of:

specifying for specifying a body part of the object; and
setting at least one of the preset unit in a radiation image and the preset weight, according to the specified part in the specifying step.

**30.** An image processing apparatus for processing radiation image having signal according to the quantity of radiation passing through an object, comprising:

a weighting device for giving a preset weight to respective areas of a preset unit in a radiation image; and
an image processing device for processing the radiation image according to weights of the areas given by the weighting device.

**FIG. 1**

100 IMAGE PROCESSOR

30 RADIATION GENERATOR

5 OBJECT

40 RADIATION IMAGE READER

110 IMAGE DATA GENERATING MEANS

IMAGE DATA

120

121 WEIGHTING MEANS

122 WEIGHTING MEANS

12N WEIGHTING MEANS

130 WEIGHT UNIFYING MEANS

140 IMAGE PROCESSING MEANS

PROCESSED IMAGED DATA

150 DISPLAY MEANS

101 CONTROL MEANS

102 OPERATING MEANS

# FIG. 2

```
                    ┌─────────────────┐
                    │      START       │
                    └─────────────────┘
                             │
              ┌──────────────────────────────┐
              │   SHOOT, READ, AND            │  S1
              │   CREATE IMAGE DATA           │
              └──────────────────────────────┘
                             │
                   ╱──────────────────╲         N
                  ╱   SINGLE WEIGHTING? ╲────────────────┐
                  ╲                     ╱                 │
                   ╲──────────────────╱   S2              │
                             │ Y          S3              │
              ┌──────────────────────────┐   ┌──────────────────────────────┐  S4
              │   EXECUTE WEIGHTING       │   │  EXECUTE PLURAL WEIGHTINGS    │
              └──────────────────────────┘   └──────────────────────────────┘
                             │                             │
                             │                ┌──────────────────────────────┐  S5
                             │                │   UNIFY GIVEN WEIGHTINGS      │
                             │                └──────────────────────────────┘
                             │                             │
                             │←────────────────────────────┘
              ┌──────────────────────────┐
              │  DETERMINE IMAGE PROCESSING │  S6
              │  PARAMETER FROM WEIGHTS     │
              └──────────────────────────┘
                             │
              ┌──────────────────────────┐
              │  EXECUTE IMAGE PROCESSING  │  S7
              └──────────────────────────┘
                             │
                   ╱──────────────────╲         N
                  ╱ IMAGE DISPLAY       ╲────────────────┐
                  ╲  EXECUTED?          ╱                 │
                   ╲──────────────────╱   S8              │
                             │ Y                          │
              ┌──────────────────────────┐                │
              │  DISPLAY PROCESSED IMAGE   │  S9           │
              │  WITH WEIGHTS              │               │
              └──────────────────────────┘                │
                             │←───────────────────────────┘
              ┌──────────────────────────┐
              │  OUTPUT PROCESSED IMAGE DATA │  S10
              └──────────────────────────┘
                             │
                    ┌─────────────────┐
                    │       END        │
                    └─────────────────┘
```

PROCESSING TO RECOGNIZE THE IRRADIATION FIELD

## FIG. 3 ( a )

IMAGE PICKUP SURFACE

EP4  EP3  EP2

EP1

EDGE OF
IRRADIATION FIELD

INSIDE THE
IRRADIATION FIELD

OUTSIDE THE
IRRADIATION FIELD

P

EPk

## FIG. 3 ( b )

Sd

P          POSITION          END

FIG. 4 ( a )

FIG. 4 ( b )

# FIG. 5

WEIGHTING IN THE IMAGE CENTER

WEIGHT [GREAT]

Y

X

# FIG. 6 ( a )

# FIG. 6 ( b )

EDGE LINK DEGREE

WEIGHT

1.0

$\alpha$

NUMBER OF HOUGH
CONVERSION VOTES

WEIGHT

1.0

2048
[12-BIT GRADATION]

SIGNAL
VALUE

# FIG. 7

WEIGHT

$\alpha$

1.0

0.7

50 [12-BIT GRADATION]

VARIANCE VALUE
OUTSIDE THE
IRRADIATION FIELD

# FIG. 8 ( a )

# FIG. 8 ( b )

# FIG. 9

# FIG. 10 ( a )

# FIG. 10 ( b )

FIG. 11

# FIG. 12

CR NETWORK 210

IMAGE GENERATOR (UPRIGHT-POSTION CR) 201d

IMAGE GENERATOR (CASSETTE CR) 201e

JOB MANAGER 204

WS 205

200

IMAGE GENERATOR (MRI) 201b

IMAGE GENERATOR (CT) 201a

DICOM CONVERTER 20b

IMAGE GENERATOR (MAMMOGRAPHY) 201c

HIS / RIS 203

IMAGE RECORDER 202

WS 205

N

EP 1 557 791 A1

**European Patent Office**

**EUROPEAN SEARCH REPORT**

Application Number

EP 05 25 0228

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 289 078 B1 (SNOEREN RUDOLPH M ET AL) 11 September 2001 (2001-09-11) * abstract; claims 1,9,10 * | 1,2,5, 12,30 | G06T5/00 |
| A | | 3,4, 6-11, 13-29 | |
| | * column 2, lines 4-15,53-59 * * column 3, lines 19-48 * ----- | | |
| X | US 5 525 808 A (IRIE ET AL) 11 June 1996 (1996-06-11) * abstract; claim 1 * | 1,5,9,30 | |
| A | | 2-4,6-8, 10-29 | |
| | * column 4, lines 50-55 * * column 5, lines 1-15 * * column 30, lines 61-67 * * column 76, line 66 - column 77, line 29 * ----- | | |
| X | PATENT ABSTRACTS OF JAPAN vol. 2000, no. 19, 5 June 2001 (2001-06-05) & JP 2001 053974 A (MINOLTA CO LTD), 23 February 2001 (2001-02-23) * abstract * ----- | 1,7,30 | TECHNICAL FIELDS SEARCHED (Int.Cl.7) G06T |
| A | US 2002/085671 A1 (SAKAIDA HIDEYUKI) 4 July 2002 (2002-07-04) * abstract; claim 1 * * paragraph [0035] * ----- | 1,2,30 | |
| A | PATENT ABSTRACTS OF JAPAN vol. 2000, no. 24, 11 May 2001 (2001-05-11) & JP 2001 189937 A (PHOTRON LTD), 10 July 2001 (2001-07-10) * abstract * ----- | 1,9,30 | |

The present search report has been drawn up for all claims

| Place of search | Date of completion of the search | Examiner |
|---|---|---|
| Munich | 28 April 2005 | Casteller, M |

EPO FORM 1503 03.82 (P04C01)

## ANNEX TO THE EUROPEAN SEARCH REPORT
## ON EUROPEAN PATENT APPLICATION NO.

EP 05 25 0228

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2005

| Patent document cited in search report | | Publication date | Patent family member(s) | | Publication date |
|---|---|---|---|---|---|
| US 6289078 | B1 | 11-09-2001 | WO | 0036884 A2 | 22-06-2000 |
| | | | EP | 1086612 A2 | 28-03-2001 |
| | | | JP | 2002532868 T | 02-10-2002 |
| US 5525808 | A | 11-06-1996 | JP | 3339079 B2 | 28-10-2002 |
| | | | JP | 5304077 A | 16-11-1993 |
| | | | JP | 3219217 B2 | 15-10-2001 |
| | | | JP | 6224103 A | 12-08-1994 |
| | | | JP | 3287047 B2 | 27-05-2002 |
| | | | JP | 6232028 A | 19-08-1994 |
| | | | JP | 3261793 B2 | 04-03-2002 |
| | | | JP | 6275495 A | 30-09-1994 |
| | | | JP | 3513892 B2 | 31-03-2004 |
| | | | JP | 6302490 A | 28-10-1994 |
| | | | JP | 3391328 B2 | 31-03-2003 |
| | | | JP | 2000173921 A | 23-06-2000 |
| JP 2001053974 | A | 23-02-2001 | NONE | | |
| US 2002085671 | A1 | 04-07-2002 | JP | 2002152593 A | 24-05-2002 |
| | | | JP | 2002152594 A | 24-05-2002 |
| JP 2001189937 | A | 10-07-2001 | NONE | | |

EPO FORM P0459